# EUROPEAN PATENT APPLICATION

(11) **EP 1 206 143 A1**
(43) Date of publication of application: **15.05.2002**
(21) Application number: 00128170.8
(22) Date of filing: 21.12.2000
(51) Int. Cl.: H04Q 1/10

(54) **Modular network elements**

(30) Priority: 10.11.2000 US 710774
(71) Applicant: Redfern Broadband Networks Inc., Wilmington, County of Newcastle, Delaware (US); Redfern Broadband Networks Pty Ltd, Eveleigh, New South Wales 1430 (AU)
(72) Inventor: Halgren, Ross, Collaroy Plateau, New South Wales 2097 (AU); Engel, Geoff, Rydalmerc, New South Wales 2116 (AU); Lauder, Richard, Maroubra, New South Wales 2035 (AU); Funk, David, Berowra Heigths, New South Wales 2082 (AU)
(74) Representative: Tiesmeyer, Johannes, Dr.

(57) **Abstract**

A modular rack structure for a network node system, the rack structure comprising a plurality of sub-racks, wherein each sub-rack is configured, in use, to carry and interconnect circuit cards which enable the sub-rack to perform a specific functionality within the node system.

## Description

### Field of the invention

The present invention relates broadly to a rack structure for a network node system, and to cards for use in such a rack structure.

### Background of the invention

In the development of hubbed optical networks, key issues include ensuring ease of network upgrade and network scalability.

With the speed of developments in this area, it is desirable to provide a network architecture/structure which ensures that options pursued and implemented at a particular stage do not significantly limit desired functionality in the future.

A further key issue is network/system control, including to provide fault locating facilities within the system.

The present invention seeks to address one or more of those issues.

### Summary of the invention

In accordance with a first aspect of the present invention there is provided a modular rack structure for a network node system, the rack structure comprising a plurality of sub-racks, wherein each sub-rack is configured, in use, to carry and interconnect circuit cards which enable the sub-rack to perform a specific functionality within the node system.

The specific functionality of individual sub-racks may comprise as a management sub-rack, or an interface sub-rack, or a switch sub-rack, or a patch panel sub-rack, or an optical network interface sub-rack, or an optical amplifier sub-rack, or a power distribution sub-rack.

Preferably, each sub rack comprises a plurality of first location identification means arranged, in use, to enable a card being connected into the sub-rack to identify its geographic location within the sub-rack. In one embodiment, the first identification means are disposed along the backplane of each sub-rack. The identification means may comprise one or more connector pins arranged, in use, to be received in corresponding connectors of the card.

Advantageously, each sub-rack further comprises a second location identification means arranged, in use, to enable each card being connected into the sub-rack to identify sub-rack data. The sub-rack data may comprise data which enables each card being inserted into the sub-rack to identify the functionality of the sub-rack. The sub-rack data may further or alternatively comprise data which enables each card being inserted into the sub-rack to identify the type of backplane of the sub-rack.

The first identification means may be arranged, in use, to also perform the functionality of the second location identification means.

In a preferred embodiment, at least some of the sub-racks are arranged, in use, to carry and interconnect two sets of circuit cards, wherein each set can enable the sub-rack to perform its specific functionality. Those sub-racks may comprise switching means for, in use, switching between the sets. The switching means may comprise a switch circuit card.

Advantageously, the modular rack structure comprises a distributed power supply structure, whereby, in use, a main rail voltage is being provided by the power distribution sub-rack and wherein specific supply voltages required in individual sub-racks are being derived from the main rail voltage. The individual sub-racks may be arranged, in use, to carry a power distribution card and interconnect the power distribution card to the main rail voltage, wherein the power distribution card is arranged in a manner such that, in use, it filters the main rail voltage for provision of the specific supply voltages required. The power distribution card may further be arranged in a manner such that, in use, it isolates the main rail voltage from the specific supply voltages.

The modular rack structure may further be arranged in a manner such that two equal main rail voltage signals are being provided to the individual sub-racks, whereby a 1+1 fault tolerant distribution of the main rail voltage is enabled.

### Brief description of the drawings

Notwithstanding any other forms which fall within the scope of the present invention, preferred forms of the invention will now be described, by way of example only, with reference to the accompanying drawings in which:
Fig. 1 shows a schematic representation of the data connections and power connections of a network node according to an embodiment of the invention;
Fig. 2 shows the management architecture of a network node according to an embodiment of the invention;
Fig. 3 shows the management channel subnet of a network node according to an embodiment of the invention;

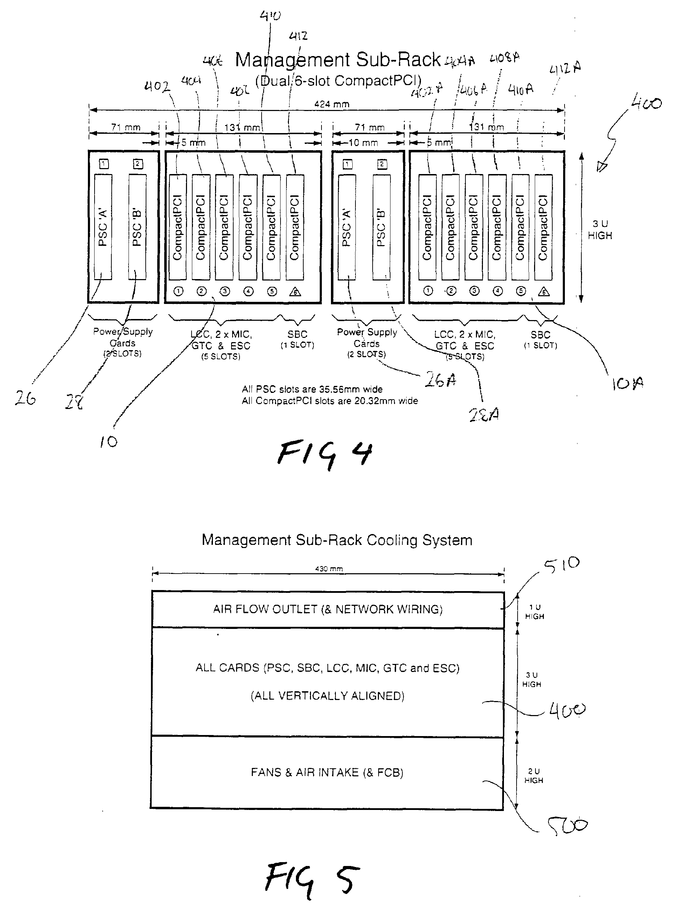

Fig. 4 shows a front elevation view of the management sub-rack of a network node according to an embodiment of the invention;
Fig. 5 shows the arrangement of the management sub-rack cooling system of a network node according to an embodiment of the invention;
Fig. 6 shows the structure and wiring of the management sub-rack of a network node according to an embodiment of the invention;
Fig. 7 shows a front elevation view of an 18 slot interface sub-rack of a network node according to an embodiment of the invention;
Fig. 8 shows the arrangement of the interface sub-rack cooling system of a network node according to an embodiment of the invention;
Fig. 9 shows a front elevation view of the switch card sub-rack of a network node according to an embodiment of the invention;
Fig. 10 shows a front elevation view of the patch panel sub-rack of a network node according to an embodiment of the invention;
Fig. 11 shows a schematic representation of the connections of the patch panel sub-rack according to an embodiment of the invention;
Fig. 12 shows an elevation view of a power distribution sub-rack according to an embodiment of the invention;
Fig. 13 shows a schematic representation of the electrical connections of the power distribution sub-rack of a network node according to an embodiment of the invention;
Fig. 14 shows an elevation view of a complete rack structure of a network node according to an embodiment of the invention;
Fig. 15A shows a front elevation view of the management or interface sub-rack of a rack structure for a network node according to an embodiment of the invention;
Fig. 15B shows a cross-sectional view of the management or interface sub-rack of a rack structure for a network node according to an embodiment of the invention;
Fig. 16 shows a schematic representation of the architecture of a line interface card and a trunk interface card of a network node according to an embodiment of the invention;
Fig. 17 shows a schematic representation of the architecture of the communications controller card of a network node according to an embodiment of the invention;
Fig. 18 shows a schematic representation of the architecture of a switch card or optical switch card of a network node according to an embodiment of the invention;
Fig. 19 shows a schematic representation of the architecture of a power supply card of a network node according to an embodiment of the invention;
Fig. 20 shows a schematic representation of the architecture of a management interface card of a network node according to an embodiment of the invention;
Fig. 21 shows a schematic representation of the architecture of a local network switch card of a network node according to an embodiment of the invention;
Fig. 22 shows a schematic representation of the architecture of a Gigabit Ethernet Test Card of a network node according to an embodiment of the invention;
Fig. 23 shows a schematic representation of the architecture the Liquid Crystal Display (LCD) Controller Card (LCC) and LCD Display of a network node according to an embodiment of the invention;
Fig. 24 shows a schematic representation of the architecture of a fan control board of a network node according to an embodiment of the invention;
Fig. 25 shows a cross sectional view of a step index profile optical fibre for use in an implementation of the network node; and
Fig 26 shows a view of a switch card utilising the step index profile optical fibre of fig. 25.

### Detailed description of the embodiments

The architecture of an exemplary embodiment of a network node, having a modular rack structure, will now be described. The embodiment described provides for full modularity and scalability including functional changes, such as the seamless conversion from electronic switching to optical switching by the swapping of a switch card for an optical switch card. In basic concept the modularity and scalability of the network node is provided by the use of a variety of cards that plug into sub-racks within the rack structure. In order to provide increased capacity, or full fault tolerance, additional sub-racks may be added.

Details of the interconnections between the cards in the rack, the size and structure of the sub-racks, and the functionality of each of the cards of an exemplary embodiment of a network node will also be described.

Preferably the embodiment of a network node described will provide full 3R (Reamplification, Reshaping and Retiming) regeneration.

To allow for modularity and scalability of the node, the architecture is divided into a number of sub-racks. A generic network node arrangement can include the following sub-racks:
- Management sub-rack;
- Interface sub-rack;
- Switch sub-rack;
- Patch Panel sub-rack;
- Optical Network Interface sub-rack;
- Optical Amplifier sub-rack;
- Power Distribution sub-rack.

In the following description of the preferred embodiment a 'Card' is so named because it plugs into a sub-rack having a backplane, and a 'Board' is so named because it is mounted "stand-alone".

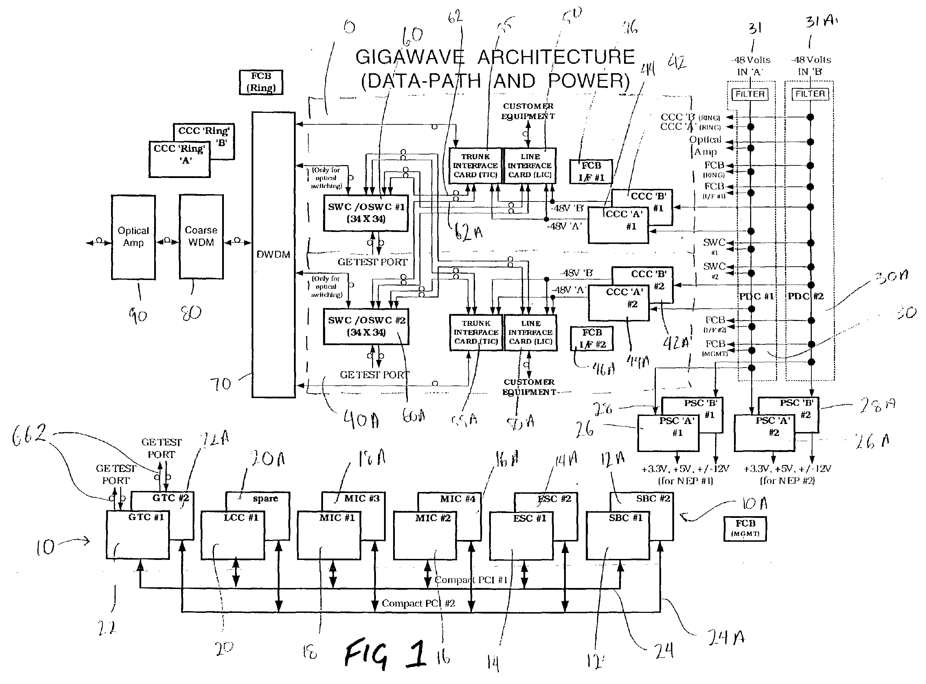

Figure 1 shows the power and datapath interconnections between all cards in a network node configured for use in an optical ring network. However, it will be appreciated that the present invention is not limited to a particular type of optical network, eg a similar power and datapath interconnection diagram between cards in an optical mesh network could be implemented.

In Figure 1, fault tolerance of the network node arrangement is provided by duplicating a number of the cards and connections within the arrangement in order to provide one set of additional elements and connections at all times, to act as a backup in case of failure. Fault-tolerant operation of the switching arrangement is achieved by providing:
- two Network Element Processors (NEPs), for example, each NEP in a metropolitan node has 1 Single Board Computer (SBC), 1 LCD Controller Card (LCC), 1 Network Switch Card (NSC), e.g. an Ethernet switch card. 1 Management Interface Card (MIC) and 1 Gigabit Ethernet Testcard (GTC), or each NEP in a core node has 1 SBC, 1 LCC, 1 NSC, 2 MICs and 1 GTC;
- two Power Supply Cards (PSC) for each NEP;
- two Communication Controller Cards (CCC) in each Interface sub-rack;
- two connections to a Wavelength Division Multiplexer (WDM) on each trunk fibre;
- two Switch Cards (SWC) or Optical Switch Cards (OSWC); and
- dual communications links between each stage of the management system.

In order to provide greater reliability each Interface sub-rack has two CCCs. This ensures that the management of each Line Interface Card (LIC) and Trunk Interface Card (TIC) is fault-tolerant.

The Network Element Processor (NEP) 10, 10A is the central controller of a single network node according to this embodiment. The NEP 10, 10A contains a Single Board Computer (SBC) 12, 12A, a local Network Switch Card (NSC) 14, 14A, one or two Management Interface Card(s) (MIC) 16, 16A & 18, 18A, a Gigabit Ethernet Testcard GTC 22, 22A and an optional LCD Controller Card (LCC) 20, 20A.

It is noted that the GTC is required only if Gigabit Ethernet test functionality is desired. As such, it is not essential to the NEP. Also, other test cards (e.g. SONET/SDH) could be incorporated in other embodiments.

Each of the cards belonging to each of the NEPs 10, 10A is connected to a common peripheral interconnect system, e.g. a compact PCI bus 24, 24A. Each of the NEPs 10A, 10B is provided with power by two power supply cards 26, 26A and 28, 28A each being connected to a filtered power supply rail (-48V in the exemplary embodiment) from power distribution cards 30, 30A. The power distribution cards 30, 30A also provide filtered power supply to each of the cards of the arrangement. Each card, and each NEP 10, 10A is provided with a separate power supply from each of the two power distribution cards 30, 30A thus providing a fault tolerant power supply to all elements of the arrangement.

The SBC 12, 12A controls all communications with the network management software and acts as a firewall. The SBC 12, 12A can also control a display on an optional in-built LCD display via the LCC 20, 20A. The SBC 12, 12A also configures the operation of the switch cards (SWC) 60, 60A, and is capable of enabling/disabling any of the interface cards (LIC 50, 50A and TIC 55, 55A) via the NSC(s) 14, 14A and CCC(s).

Where CompactPCI cards comprising the NEP are used, they comply with the CompactPCI hot-swap specification for "full hot swap" operation. However, it will be appreciated that other peripheral interconnect systems may be used without departing from the scope of the present invention.

All cards in all sub-racks are uniquely identifiable within a network node, for software access purposes. In order to do this the card type, model and version are permanently stored on each card. Each sub-rack has a sub-rack identifier which is unique within each network node, and each card or port in each sub-rack has a slot or port identifier. The backplanes in each of the sub-racks (including the CompactPCI backplanes) have geographic location pins, thereby enabling each card to identify its location in a given sub-rack. The backplanes also have a backplane identity, that permit a card inserted into the backplane to identify the type of backplane into which it is inserted. Preferably all cards can access this geographic location information, and make it available to the management system. Interface and Switch sub-rack is identified via selection switches located on each sub-rack. It is also important that each CCC can determine the backplane type via pins on the backplane.

The Management sub-rack, does not require switches indicating its number (within the network node), since only a single management sub-rack is used for each network node. In contrast to this such switches are required for each Optical Network Interface sub-rack, each Interface sub-rack, each Switch sub-rack, and for each Optical Amplifier sub-rack.

Turning now to the data connections between the cards which make up the network node, it can be seen that the cards can be divided into two equivalent and identical groups 40, 40A. Each of these groups provide full range of switching and interface functionality of the arrangement. The arrangement 40 includes two communications controller cards 42, 44, a fan controller board 46, one or more line interface cards 50, and/or trunk interface cards 55 and a switch or optical switch card 60. The other equivalent arrangement 40A is provided with an arrangement of cards identical to arrangement 40 (numbered in a similar fashion).

A series of data connections (designated by a circle on a linking line) allow data to be transferred between the cards of the arrangement 40. For every connection between two cards of the arrangement 40, e.g. data the connection 62 between the trunk interface card 55 and the switch/optical switch card 60, there is also a connection between the first element of arrangement 40 to the corresponding second element of duplicate arrangement 40A. That is, there is a link 62A which connects trunk interface card 55 to switch/optical switch card 60A which corresponds to data connection 62. This replication of the data connection from one set of cards to the other is aimed at providing fault tolerant operation of the arrangement. Thus if either of the switch cards 60, 60A fails, the other is still able to provide the switching functionality for the arrangement.

Further duplication of functionality is provided within each of the duplicated arrangements 40, 40A by the provision of two communications controller cards 42, 44 and 42A, 44A. Each of the communications controller cards 42, 44 within arrangement 40 provide power to the line interface card 50 and trunk interface card 55 of the arrangement. Thus, if one of the communications controller cards 42, 44 fails power may be supplied by the other.

The switches/optical switches 60, 60A and the trunk interface cards 55. 55A are connected via data connections to the wavelength division multiplexer 70.

For some multiplexer and switch implementations, the various interface transceivers are fitted to plug-in cards which connect to the fibre via optical connectors fitted to a backplane. This simplifies transceiver and card maintenance, since the interface cards can be removed and inserted without having to touch the fibre connections. In such implementations, backplane fibre interconnects may be used to connect the interface transceiver signals to a patch panel. The patch panel enables front-access for manually cross-connecting customer cables and fibres or test equipment to the appropriate backplane interconnects and associated interface cards.

It is desirable in such multiplexer or switch implementations, that any interface card can be fitted to any card slot in the backplane, irrespective of the interface protocol, transceiver or fibre-type. However, a problem arises if some interface transceivers require a multimode fibre interconnect and others require a singlemode fibre interconnect. It may then be desirable that all maintenance and installation operations can be done front the front of the multiplexer or switch, without having to modify anything on the rear, such as the backplane connectors or the backplane interconnect fibres.

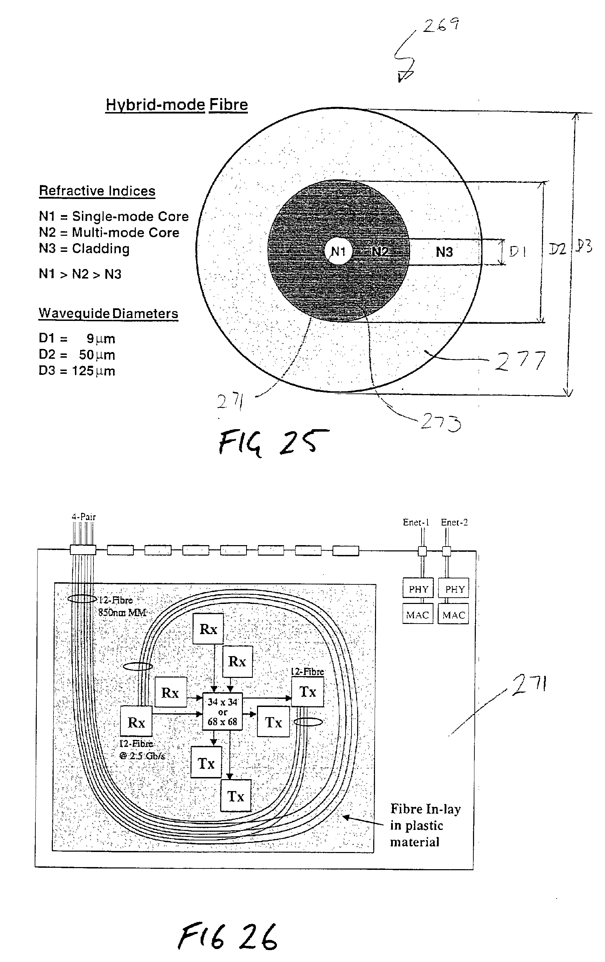

One possible solution to the above problem is to install singlemode (9/125µm) connectors on the backplane and patch panel and to employ a "HybridModeFibre ™" step index fibre 269 of the type shown in fig 25. This "HybridModeFibre™" 269 can exhibit either singlemode fibre (SMF) or multimode fibre (MMF) behaviour, depending on the transceiver optical signal launch conditions. The HybridModeFibre (HMF)™ only needs to exhibit this behaviour over short distances (of order metres) as defined by the backplane to patch panel interconnect distance.

An example of such a HybridModeFibre™ is similar to the type of fibre used for cladding pumped optical amplifiers and fibre lasers. Figure 25 illustrates a simple step-index implementation of the proposed HybridModeFibre™. The fibre has three regions with different refractive indices. A central single mode core 271 of diameter D1, an outer multimode core 273, of diameter D2 and a cladding 277 of diameter D3. The refractive indices of the three layers of the fibre follow the relationship n_{single-mode} > n_{multi-mode} > n_{cladding}.

Such a fibre is capable of both of the following functions, by changing the launch conditions of the transmitted optical signal:
- Guiding an optical signal from a nominal 1310nm or 1550nm wavelength single-mode laser transmitter to a photodiode receiver using the waveguide properties of a single-mode fibre having a core diameter of 9 µm and a cladding diameter of 50 µm; and
- Guiding an optical signal from e.g. a nominal 850nm wavelength Vertical Cavity Surface-Emitting Laser (VCSEL) or Light Emitting Diode (LED) transmitter to a photodiode receiver using the waveguide properties of a multi-mode fibre having a core diameter of 50 µm and a cladding diameter of 125 µm.

The advantages of using a fibre as described in connection with Figure 25 can include:
- Interface Subrack Line and Trunk Cards having different fibre interface requirements (multimode or singlemode) can be inserted into any card slot (assuming that all card slots are pre-wired with HybridModeFibre™ interconnects);
- Switch Card (SWC) backplanes can be hard-wired with HybridModeFibre™ interconnects to the Interface Subrack backplanes and patch panels. This allows simple plug-in upgrades from 2.5 Gbit/s OEO Switch Cards with 850nm VCSEL transceiver interfaces to 10 Gbit/s OEO Switch Cards with 1310nm or 1550nm singlemode laser interfaces, or to OO Switch Cards with 1310nm or 1550nm singlemode fibre interfaces.

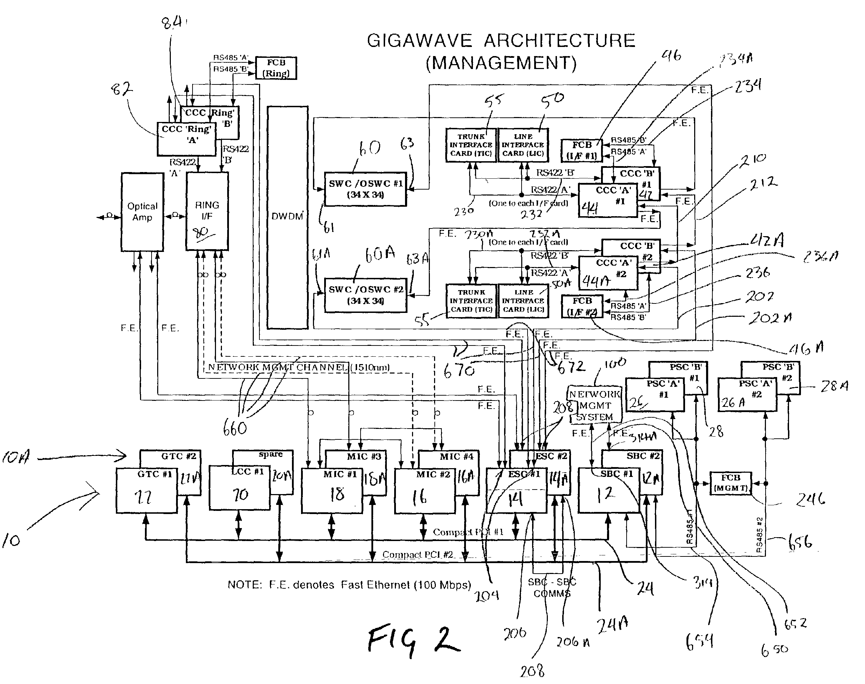

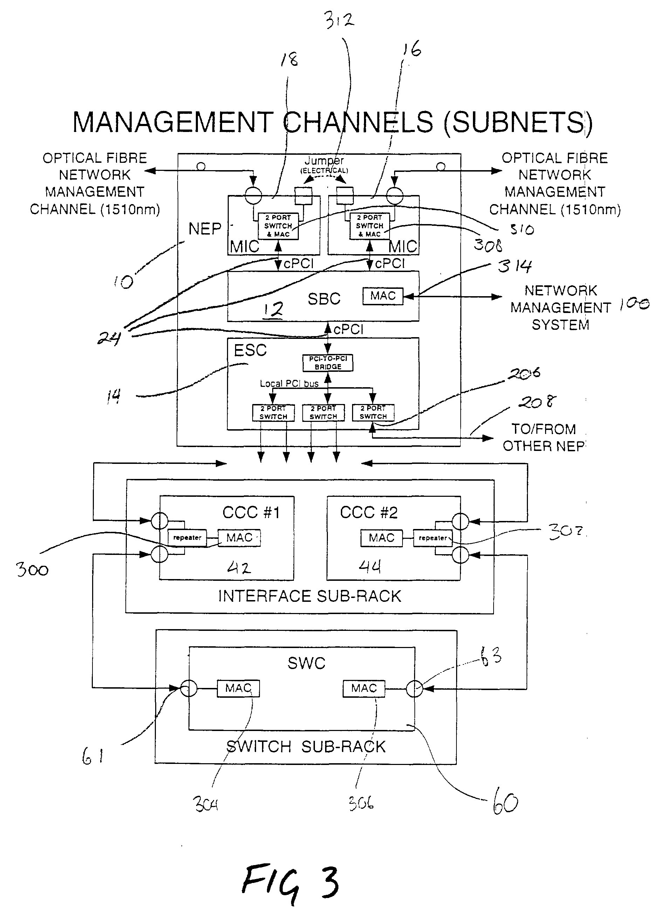

An exemplary configuration of the management interconnections between all cards of the arrangement is shown in Figs. 2 and 3.

Note that for fault-tolerant operation, the SWC should be at the end of the cascaded management chain. This is because in the exemplary embodiment removal of the SWC can break the management chain.

Turning now to Fig. 3, which shows the management architecture of the arrangement it can be seen that the SBC 12, 12A, LCC 20, 20A, NSC, MIC(s) 18, 18A and GTC 22, 22A are each connected to buses 24, 24A in the Management sub-rack, with the SBC 12, 12A as bus master. Communications between the Management sub-rack and the Interface sub-rack is performed via a local network link, in the exemplary embodiment via a Fast Ethernet link (100 Mbps) (denoted by F.E. in Fig. 2) between the NSC 14, 14A and the CCCs 42, 42A, 44, 44A, 82, 84 of the Interface sub-rack. It will be appreciated that other local network links may be used, depending amongst other parameters on speed requirements.

If optical switching of Dense Wavelength Division Multiplexing (DWDM) signals is to be performed, then no LICs 50, 50A would be required. However, TICs 55, 55A could still be used to provide a wavelength switching capability.

The rack has a distributed power supply architecture, that is, each card is responsible for conversion of a rail voltage (in the exemplary embodiment -48V) into the logic power supply rails 31, 31A required for its operation, except for the cards on the backplanes 24, 24A. All cards in each Interface sub-rack are powered via dual filtered rail power supplies. This is performed by the dual CCCs 42, 44 and 42A, 44A, each of which filters a rail voltage before passing it on to the cards in the sub-rack. In the Management sub-rack, dual power supply cards 26, 28 and 26A, 28A provide the supply voltages for all cards in the NEP 10, 10A.

Fig. 3 also illustrates the logical connections between MIC(s) 16, 18 & 16A, 18A, SBC 12, 12A, NSC 14, 14A, SWC 60, 60A and CCCs 42, 44 & 42A, 44A to provide management channel subnets.

The communications links 202, 202A between each NEP 10, 10A and the corresponding CCC 42A, 44A are point to point local network link connections. The connections are made via the NSCs 14, 14A, which each have five ports. Four of these ports 204, 204A provide an interface to the sub-racks, and a separate port 206, 206A provides communications between the two SBCs via link 208.

The CCCs 42A, 44A include an repeater function, which allows for cascading of local network connections to other sub-racks via connections 210, 212. A maximum of two repeater operations is allowed per link, to ensure efficient operation of the link. As shown in Fig 3, each CCC 44, 42 contains one Media Access Controller (MAC) 300, 302.

The SWCs 60, 60A do not include repeater functionality. Since both CCCs in each Interface sub-rack must be capable of directly addressing the SWC 60, 60A, each SWC 60, 60A has dual access ports, 61, 63 and as a result also includes two MACs 304, 306.

Communications between the NEP 10, 10A and the optical fibre network management channel is performed via a MIC 16, 18 and an optical add/drop connection to the incoming fibre, which is located in the Optical Network Interface sub-rack. Management of the Optical Network Interface sub-rack is achieved via two CCC 82, 84 cards located in this sub-rack.

For a network node to have access to two redundant optical fibre network management channels, it is necessary to use two MICs 16, 18. Each MIC 16. 18 contains a two-port switch 308, 310, which contains one MAC. The jumpering of the two MICs 16, 18 is achieved via an electrical connection 312 to/from the two-port switch 308, 310.

Each SBC 12, 12A is connected directly to the Network Management System (NMS) 100 via the local network port 314 on the front of each SBC 12, 12A. This direct connection enables the SBC 12, 12A to create a firewall between the Network Management System 100 and the Management sub-rack. The NEPs 10, 10A are capable of direct communications with each other via the buses 24, 24A, and a dedicated local network subnet 208 connecting the NSCs 14, 14A in each NEP 10, 10A.

The communications link between each CCC 42, 44, 42A, 44A and each interface card 50, 55, 50A, 55A in the exemplary embodiment is via serial data (RS422) - multiple low speed point to point links 230, 232, 230A, 232A. The communications between the CCC and any slower peripherals, such as the fan control board 46, 46A, in the exemplary embodiment is via an RS485 connection - a single, multipoint communications network 234, 234A, 236, 236A. The SBC 12, 12A is responsible for monitoring the operation of slower peripherals in the Management sub-rack via the multipoint communications network , including the fan control board 246 in the management sub-rack, and both of the power supply cards 26, 26A, 28, 28A that power each NEP 10, 10A.

It will be appreciated that other low-speed point to point links and/or multipoint communications networks could be used depending, amongst other parameters, on speed requirements.

As discussed the modularity and scaleability of the network node is provided by the use of modular sub-racks. The dimensions, in particular, the height of each sub-rack is a multiple of a fixed size unit. In this embodiment 1 unit (1U) is equal to 44.45mm.

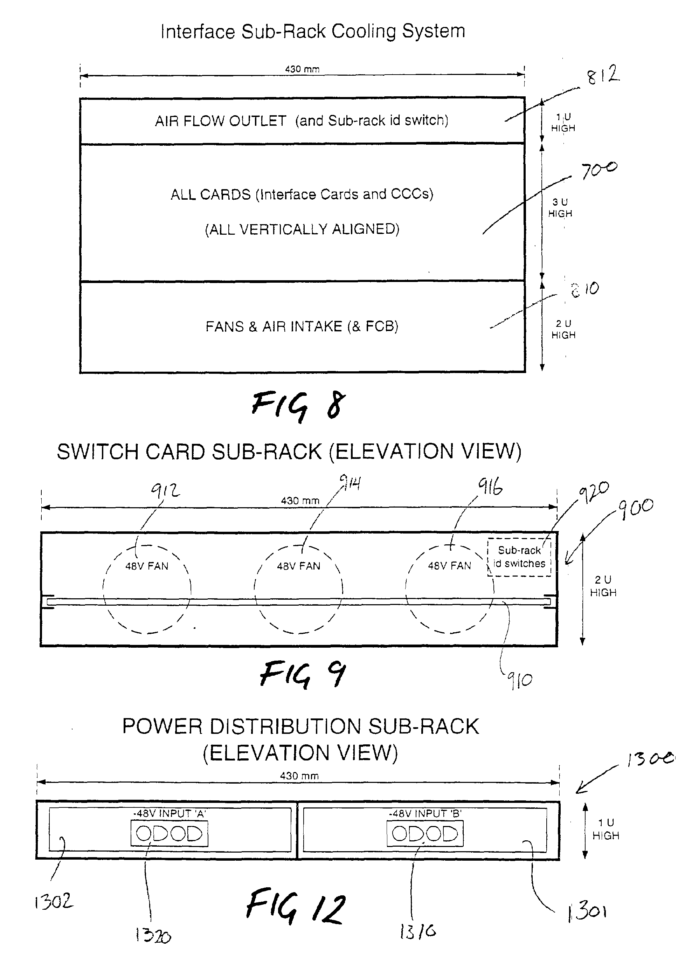

Fig. 5 shows an elevation view of an exemplary management sub-rack. A management sub-rack 400 can contain two NEPs 10, 10A, with two fault-tolerant PSCs 26, 28, 26A, 28A for each NEP 10, 10A. Each NEP 10, 10A includes a six-slot backplane that can accommodate 1 SBC, 1 LCC, 1 NSC, 2 MIC and 1 GTC in slots 402 to 412 and 402A to 412A. The two power supply cards 26, 28, 26A, 28A per NEP 10, 10A are mounted in a separate backplane, which serves to provide power for the corresponding NEP.

To enable ease of upgrade and fault replacement, each set of 2 PSCs 26, 28 and 26A, 28A and corresponding backplane and cards 402 to 412, 402A to 412A are to be removable as a 'cartridge' 600, 610. The two NEP cartridges 600, 610 are operationally identical and interchangeable. Each NEP is able to determine its physical location (ie left side or right side). In the exemplary embodiment, one pin of the power connector to the PSCs is to be wired to ground (left side NEP) 600 or left open circuit (right side NEP) 610. The SBC is responsible for communicating this status bit to the SBC via the multipoint communications network.

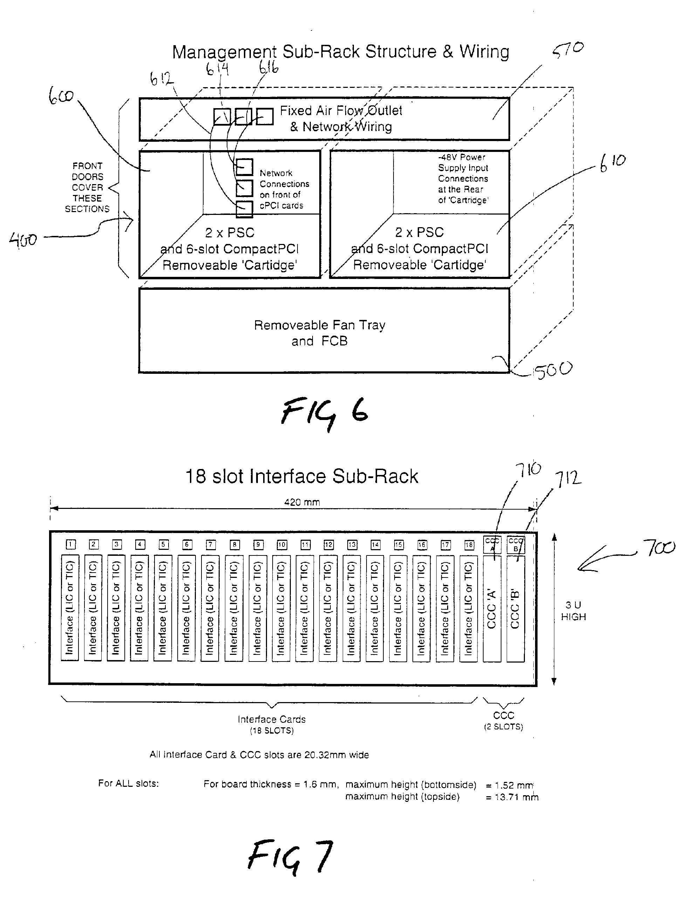

Turning now to Fig. 6, which illustrates the interconnection of the Management sub-rack. The wiring of the cards comprising the Management sub-rack comes from the front of each card. All cables from the cards for example, 612, 614, 616 cards are to be "jumpered" to corresponding terminals in the air flow outlet area 510.

The following cable terminations, illustrated in Fig. 2, occur in the air flow outlet section 510 of the management sub-rack (per NEP):
- electrical connections to/from SBC (external connections to NMS) 650, 652;
- multipoint communications network connections to/from SBC 654, 656;
- duplex optical connections to/from 2 MICs (connection to network management channels) 660;
- duplex optical connection to/from GTC (connects to the Patch Panel) 662 on Fig. 1; and
- electrical connections 670, 672 from NSC.

Note that the connection 208 between SBCs is direct and does not leave the Management sub-rack.

Turning now to Fig. 7, which illustrates the slot configuration of the interface sub rack of the network node. The Interface sub-racks 700 contain all interfaces to customer equipment and trunk DWDM fibres.

Each Interface sub-rack requires two slots 710, 712 for fault tolerant connection to the Management sub-rack 400. These slots 710, 712 are reserved for CCCs, which perform the function of interfacing between the NEP and the interface cards.

The Interface sub-rack 700 can accommodate up to eighteen interface cards. The interface between the DWDM, the SWC, and the interfaces to the customer can be divided into two types, namely the LIC, which interfaces the customer into each of the fault-tolerant SWCs, and the TIC, which interfaces between the SWC and the DWDM. Any combination of LICs and TICs can be used. This presents the opportunity to have protection interface cards. For example, the rack shown in Fig. 7 could accommodate eight LICs to customer equipment, eight TICs to trunk DWDM fibres, and two spare TICs to spare DWDM fibres. The Interface sub-rack can have a single backplane. All adjacent interface card slots have interconnections to permit electrical bypassing of the switch card.

Sub-rack ID switches are used to identify the sub-rack. These switches are located in the air outlet section 812 of the sub-rack 700, and are connected to both CCCs 710, 712 via the backplane. The exact location of each card is determined by the sub-rack ID and the slot ID. The slot ID is provided to each interface card by the Interface sub-rack backplane. The type of backplane is conveyed to each CCC 710, 712 via pins on the backplane. Hence the CCCs 710, 712 can know the type of sub-rack into which they are inserted.

The connections between each interface card and each CCC, connection 230, 232 & 230A, 232A in Fig 2, are low-speed point-to-point links. The connection eg 202, 202A in Fig 2 between each CCC and the corresponding NEP is via point-to-point local network links and may pass through one or two repeaters on other CCCs or SWCs. Each CCC is responsible for filtering the input rail voltage before passing it on to each interface card in its sub-rack. Each interface card is then responsible for generation of the voltage rails required for its operation.

Each interface card provides a "Card-OK" signal via the backplane to both CCCs, to indicate that the card is fully operational. If a card is removed or fails in some way, this "Card-OK" signal is de-asserted. This urgent alarm stimulates the CCCs into trying to determine the fault and/or reporting the failure to other cards, such as the switch card.

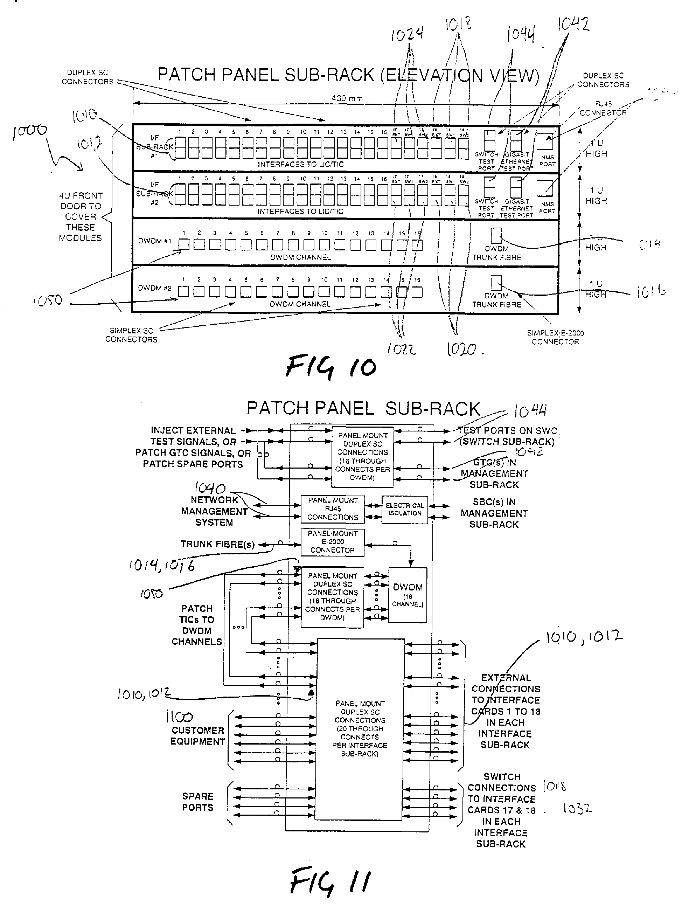

As with the Management sub-rack, the Interface sub-rack is 3U high and has a 2U high fan air intake unit 810 mounted beneath it, and a 1U air flow outlet 812 mounted above the Interface sub-rack 700. The air cooling for the Interface sub-rack is illustrated in Fig. 8.

Turning now to Fig. 9, the Switch sub-rack 900 is a 2U high sub-rack that mounts a single 34 x 34 electrical or optical switch card 910 in a horizontal alignment. The air cooling of this single PCB is performed by fans 912, 914, 916 which are mounted vertically and blow air across the PCB. The air intake is at the front of the sub-rack, and air exhaust is at the back and rear sides of the sub-rack.

Sub-rack ID switches 920 are used to identify the sub-rack. These switches are located above the SWC 910. The exact location of each port of the SWC 910 is determined by the sub-rack ID and the port ID. Since there are only two communications ports on the SWC 910, these ports can be labelled as ports 0 and 1.

The Switch Card (SWC) has purely optical connections to each of the interface cards in each of the Interface sub-racks. Electrical connections from the Power Distribution sub-rack provide power to the components on the board and to the fans 912, 914, 916. The fans located at the back of the Switch sub-rack 900 are controlled by the switch card 916. The switch card is responsible for filtering and converting the dual (fault-tolerant) input rail voltages.

There are dual local network connections between the switch card and the NEP, connections 672 of Fig. 2. Two repeaters are included in the switch card 910 to permit cascading of the communications links.

An Optical Switch Card (OSWC) will only have connections to the DWDM sub-rack, unless wavelength switching is required. If wavelength switching is desired, then a TIC can be used with loopback on the trunk interface.

Fig 26 shows a switch card utilising multimode optical fibre for interconnects within a network node.

Polymer encapsulated multi-fibre interconnect fabrics for on-board and backplane applications are being used. The fibres are in-laid within a polymer sheet. The polymer sheet provides protection and maintains fibre positioning within the fabric and alignment to external fibre-optic connectors.

It may be desirable to provide encapsulated multi-fibre interconnects which are independent of the transceiver type, i.e. single- or multi-mode.

This can be provided by utilising glass or polymer based HybridModeFibre™ (HMF™), as decribed above with reference to Figure 25. This overcomes the singlemode vs multimode design problem in multi-fibre interconnect fabrics. When these fabrics are required, the utilisation of HMF™ fibre within the fabric increases the range of interface devices that can connect to it.

By using HMF™ on-board transceivers can be upgraded from multimode to singlemode for higher-speed interfaces and applications without having to upgrade the board or backplane multi-fibre interconnect fabric.

Fig 10 shows a front elevation view of the Patch panel sub-rack. The Patch Panel sub-rack 1000 provides the ability to connect an interface card in any slot of an Interface sub-rack to any channel on the DWDM. This enables each slot in the Interface sub-rack to be line/trunk and frequency independent. The patch panel sub-rack 1000 is 4U high sub-rack and contains the following items:
- DWDM component(s) and all connections to the DWDM component(s),
- electrical isolation of network cabling from NMS,
- all optical line and trunk connections to the LICs and TICs,
- all external network management system (NMS) interconnections,
- connections to each of the GTC in each NEP,
- connections to the SWC/OSWC.

This sub-rack is passive and serves to contain the following interconnections:
- introduction of the fibres to/from customers 1010, 1012, and connection of these into the LICs, which are located in the Interface sub-rack(s),
- introduction of the DWDM trunk fibre(s) 1014, 1016 to the DWDM component(s). which are located within the Patch Panel sub-rack,
- patching of fibres between DWDM channels and connections through to the TICs, which are located in the Interface sub-rack(s),
- connection to one 'external' and two 'switch' sides of cards 17 & 18 in each Interface sub-rack, via 1018, 1020, 1022, 1024.
- introduction of external connections 1040 to the network management system, and connection of these into the SBCs, which are located in the Management sub-rack.
- possible patching of GTC connection to test port of SWC via 1042, or introduction of external test signal through to SWC via 1044.

No cooling or electrical power is required by the patch panel sub-rack. No sub-rack identity switches are required for the Patch Panel sub-rack since this sub-rack is not managed.

Clearly all subracks should be suitably attached to a rack framework, so as to be able to resist shock and vibration .

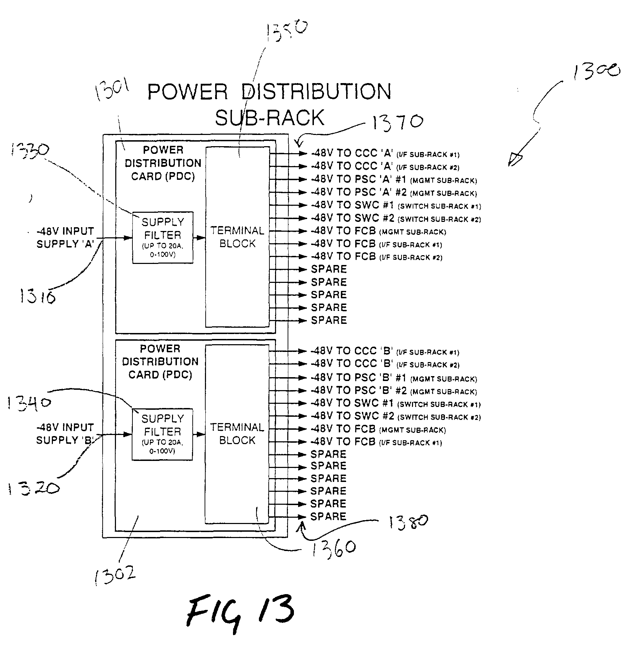

Fig. 13 shows a schematic representation of the electrical connections of the power distribution sub-rack 1300. This 1U high sub-rack simply filters and distributes the rail voltage power supply(s) to the cards or sub-racks of the network node. The Power Distribution sub-rack contains a mains filter module that will provide protection from conducted emissions, and contains a terminal block that is pre-wired to the many sub-racks that require power. It is the responsibility of each power supply card (in the Management sub-rack), each CCC (in Interface sub-racks), each switch card (in the Switch sub-rack) and each fan control board (in the fan trays) to provide the required voltage isolation for the incoming rail voltage supply(s).

The Power Distribution sub-rack 1300 has two separate power supply modules 1301, 1302 that are separately removable and replaceable. These separate power supplies 1301, 1302 provide fault-tolerant distribution of the rail voltages.

Each Power Distribution Card (PDC) 1301, 1302 serves to filter the rail voltage which is input via the front connector 1310, 1320 as shown in Fig. 12, and then distribute the filtered rail voltage to each of the following places:
- one CCC in each Interface sub-rack,
- one PSC in each NEP (ie. two PSCs in each Management sub-rack),
- each SWC (ie. one per Switch sub-rack), each Fan Controller Board (FCB) (ie. one per Management sub-rack, and one per Interface sub-rack).

Each PDC 1301, 1302 can connect to up to 14 different sub-racks. The connections and the architecture of a pair of exemplary PDCs are illustrated in Fig. 13.

The power distribution card 1301, 1302 has the rail voltage applied to its front connector 1310, 1320. The rail voltage supply is filtered by a main filter module 1330, 1340. The filtered supply is then connected to a terminal block 1350, 1360. The terminal block 1350, 1360 supplies the filtered output voltage to the CCC, SWC & FCB boards as required, via an array of 14 output terminals 1370, 1380.

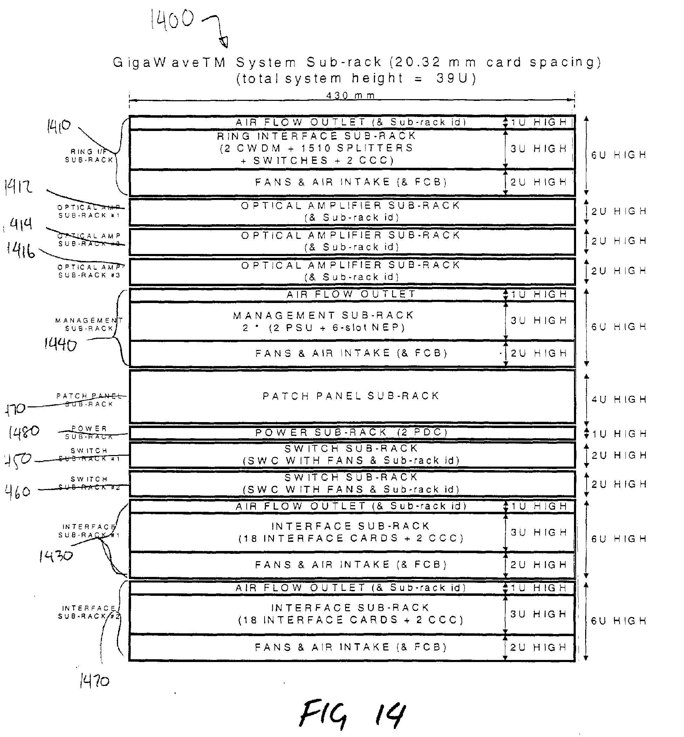

If the Management sub-racks, Interface sub-racks, and Switch sub-racks were to be supplied to an end user separately, one embodiment would be that each sub-rack has a patch panel to make interconnection possible. To eliminate the need for multiple patch panels in another embodiment, a single System sub-rack is provided. Such an arrangement 1400 of sub-racks is shown in Fig. 14. The sub-racks are arranged to allow easy access to the Patch Panel and Management sub-racks.

The interconnections within and between sub-racks are pre-wired. This wiring is not accessible during normal operation.

The arrangement 1400 includes:
- one optical Network Interface sub-rack (and related fan airflow components 1410),
- 3 Optical Amplifier sub-racks 1412, 1414, 1416,
- two Interface sub-racks (each 6U high, including cooling), 1420, 1430
- one Management sub-rack (6U high, including cooling), 1440
- two Switch sub-racks (each 2U high including cooling), 1450, 1460
- one Patch Panel sub-rack (4U high), and 1470
- one Power Distribution sub-rack (1U high) 1480.

This results in a total system height of 39U.

For improved fault tolerance, a second NEP can be added to a single NEP system. However, this does not require an additional sub-rack since the management sub-racks can contain two NEPs.

In contrast to arrangement 1400, a more fully fault tolerant system would require a number of additional subracks including the following:
- one optical network Interface sub-rack,
- Optical Amplifier sub-racks,
- four Interface sub-racks (each 6U high, including cooling), [duplicated]
- one Management sub-rack (6U high, including cooling), [2 NEPs]
- two Switch sub-racks (each 2U high including cooling),
- two Patch Panel sub-racks (4U high). [duplicated]

Such a system would still only require a single Management sub-rack, since each NEP controls a separate system.

A cross sectional view of a sub-rack (Interface or Management) is shown in Fig. 15B. A front elevation view of the same sub-rack is shown in Fig. 15A.

The cross sectional view of the sub-rack shown in Fig. 15B shows the mounting position of a card 1504 within region 1502. In order to provide optimised modularity each of the cards of the network node should have the same board dimensions.

The fan tray, 1520 which includes the fans, air filters, and filter control board, is slideably mounted in the housing and can easily be removed and replaced.

A description will now be given of an exemplary set of cards suitable for use in an implementation of a network node according to an embodiment of the invention.

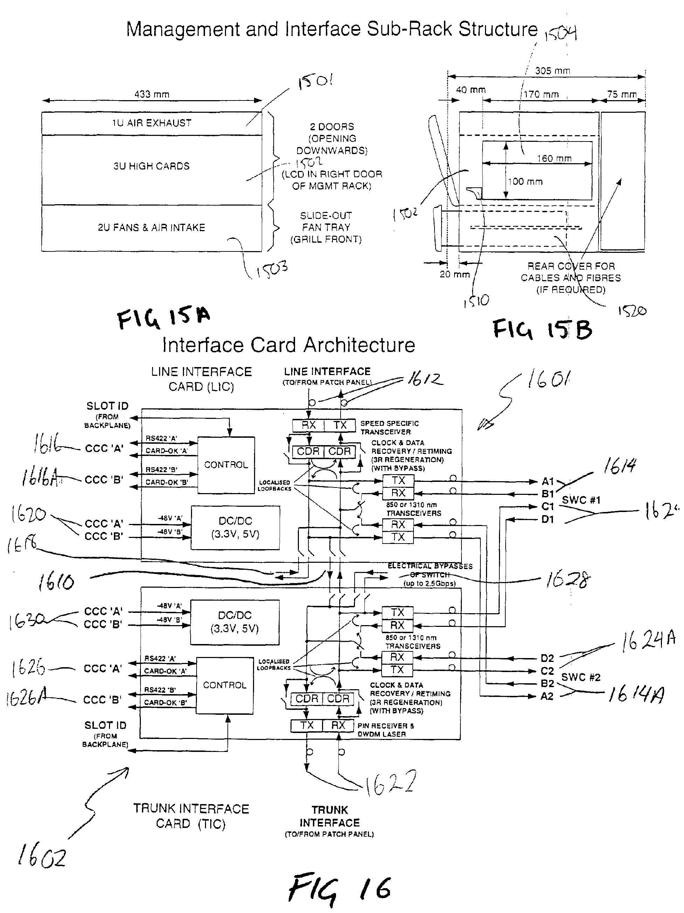

The generalised structure of interconnections within an interface card is shown in Fig. 16. To enable a simple physical implementation of the interface cards it is advantageous to provide two types of interface cards, namely: the Line Interface Card (LIC), 1601 which interfaces the customer to the SWC, and a Trunk Interface Card (TIC), 1602 which interfaces the SWC to the trunk fibre. This system simplifies any M:N protection scheme implemented in the arrangement since only the trunk interfaces to the WDM sub-rack need be duplicated.

The connection 1610 between corresponding LIC 1601 and TIC 1602 enables electrical bypassing of the switch. These connections are dedicated pins that have carefully controlled matched transmission impedances. The corresponding LICs 1601 and TICs 1602 are indicated by slot labels marked on the Interface sub-rack.

The LIC 1601 has connections to the patch panel 1612 (for interfacing to customers), to both fault-tolerant switch cards, 1614, 1614A to both fault-tolerant CCCs 1616, 1616A, and both of the adjacent cards 1618. The TIC 1602 has connections to the patch panel 1622 (for patching to the desired channel of the DWDM), to both fault-tolerant switch cards 1624, 1624A, to both fault-tolerant CCCs, 1626, 1626A and both of the adjacent cards 1628.

The LIC 1601 is responsible for generating its own voltages from the rail voltages provided by both CCC 'A' and CCC 'B' via connection 1620. Inrush limiting, filtering and monitoring of the supplies is also performed onboard the interface card.

The TIC 1602 is responsible for generating its own voltages from the rail voltages provided by both CCC 'A' and CCC 'B' via connection 1620. Again inrush limiting, filtering and monitoring of the supplies is also performed onboard.

The control function on all Interface cards serves to monitor and control all functionality of the card, such as local loopbacks. All errors, faults, temperatures etc. are reported back to the CCC via this control circuit and the low-speed point-to-point communications link 1616, 1616A, 1626, 1626A.

Preferably, all Interface cards have 3R regeneration, with bypass capability. The transceivers used to communicate with the Switch card(s) can be, for example, either 850nm or 1310nm, depending upon availability and cost, etc.

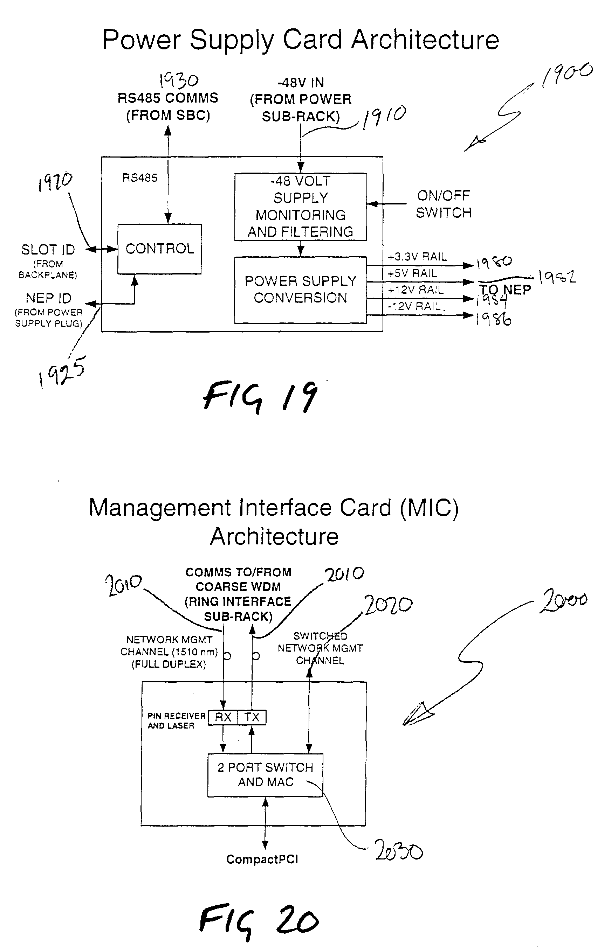

Fig. 17 shows a schematic representation of a Communications controller card of the network node. Each CCC 1700 is the centre for communication channels within each sub-rack and has the following links:
- 18 low-speed point-to-point communication links 1700, one with each interface card in the Interface sub-rack,
- 18 input "Card-OK" signals 1700, one from each Interface card in the Interface sub-rack,
- one multipoint communications network link 1730 to communicate with other (lower speed) cards in the sub-rack, such as the FCB,
- 1 bi-directional link between CCCs 1735, and a CCC-Card-OK signal 1740 from the other CCC,
- two local network communications links 1745, 1750 to NSC (located in the NEP) or CCC or SWC, and
- connection to the sub-rack identity switches 1752, 1754, 1756.

Each CCC 1700 also performs inrush limiting, filtering and monitoring of one rail voltage before passing this rail on to all interface cards using filtering and monitoring means 1560. Dual load-sharing of the rail voltage is provided to all interface cards via the presence of the two CCCs.

Each CCC 1700 also has a slot ID and a backplane type ID provided to it by the backplane. This ensures that each communications port has a unique location address, and each CCC knows the type of backplane into which it is inserted.

The CCC 1700 has two local network connection links 1745, 1750 since it contains a repeater 1765, which allows the CCC to cascade the local network connection on to other CCCs or to SWCs.

Since the CCCs control the interface cards, it is important that the CCCs' control logic does not enter and remain in an unknown state. To prevent this occurrence, it is essential that each CCC have an internal watchdog timer.

Fig. 18 shows a Switch Card (SWC) & Optical Switch Card (OSWC) 1800 architecture which may be used in connection with an embodiment of the network node.

In an exemplary embodiment a SWC 1800 that implements a 34 x 34 function is utilised. That is, 34 inputs and 34 outputs to and from the switch matrix. There are a total of 64 optical connections (32 bidirectional channels 1810, 1820) to and from the interface cards (LIC and TIC). The remaining two bidirectional channels 1830 (4 optical connections) are connected to the two 'Switch Test Port' connectors on the Patch Panel sub-rack.

The SWC 1800 has two local network communication ports 1835, 1840 and two MACs 1845, 1850. These connect to two separate local network communication channels, each of which is independently connected to the fault-tolerant CCCs. These links are used to communicate with the SBC (via the NSC), which can configure, enable or disable the operation of the SWC.

The control section 1855 of the SWC must be capable of performing protection switching, to enable fast swapover of cross-connected signals when a fault occurs. This protection switching could be based on a pre-determined fault condition list that is stored within the SWC. This list can be provided to the SWC from the SBC when the communications link with the NEPs is established. Thereafter the SWC should be able to operate without intervention from the SBC.

The SWC 1800 has a connection to all optical fibres and the sub-rack ID switches, via the backplane. The sub-rack ID switches enable each communications port to be given an ID, thereby ensuring that each communications port has a unique address. The SWC 1800 is provided with two unfiltered rail voltages 1862, 1864 from the Power Distribution sub-rack. The SWC 1800 is then responsible for inrush limiting, filtering and monitoring of both these rails, before converting the rail voltages into the voltages required for its circuitry.

It should be noted that this architecture does not prevent expansion of the switching capability of the SWC. The only changes would be the number of fibres connecting to the SWC, and the number of transceivers 1812, 1822 located on the SWC.

The implementation depicted is that of a switch card. However, it should be noted that an optical switch card has the same architecture as the SWC, except that transceivers 1812, 1822 are not required to convert the optical signals into electrical signals.

Fig. 19 illustrates the operation of the Power supply card.

The function of the PSC 1900 is to generate the voltages required for the NEP, from the rail voltage 1910.

The PSC has slot identification 1920 provided by the backplane, which allows it to know its physical location (left side or right side) in the sub-rack. In an exemplary embodiment, this is enabled by having one pin of the power connector to the PSCs 1925 is to be wired to ground (left side NEP) or left open circuit (right side NEP).

Each PSC 1900 is connected via a multipoint communications network link 1930 with its corresponding single board computer. This link is used to permit the management system to enable/disable the power supply, and to be able to monitor performance and any faults. The 1930 link is also used to communicate the NEP ID status bit to the SBC.

The PSC needs to be able to provide sufficient current for the LCD card in the backplane to power the LCD Craft Terminal.

The architecture for an exemplary management interface card is shown in Fig. 20.

The MIC 2000 is located in the NEP, and serves to interface to one optic fibre network management channel (1510 nm) 2010 and one electrical switched network management channel 2020 to the SBC.

The MIC contains a 2-port switch, 2030 which permits isolation of the management traffic from the network management channel. Traffic can be passed on to the next network node by the electrical connection of two MICs.

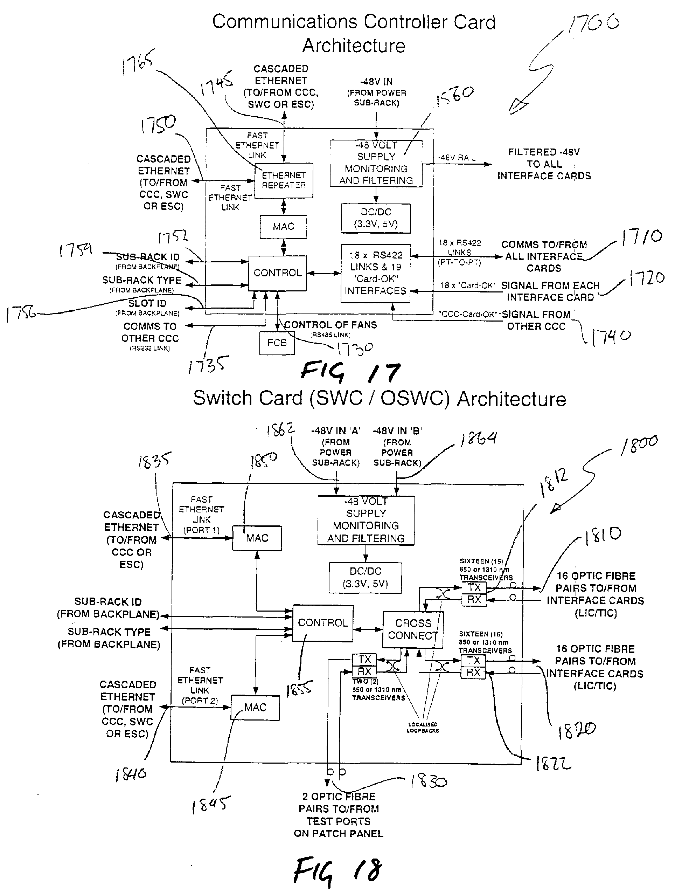

The architecture of the communication link switch card 2100 is shown in Fig. 21.

The NSC 2100 serves to provide multiple, separate local network communication channels 2110, 2120. These are suitable for connection to multiple CCCs and SWCs. The NSC 2100 also provides a separate channel, 2130 which is suitable for interconnection of the two fault-tolerant NEPs. This separate channel has an independent MAC that ensures the isolation of the inter-NEP communications.

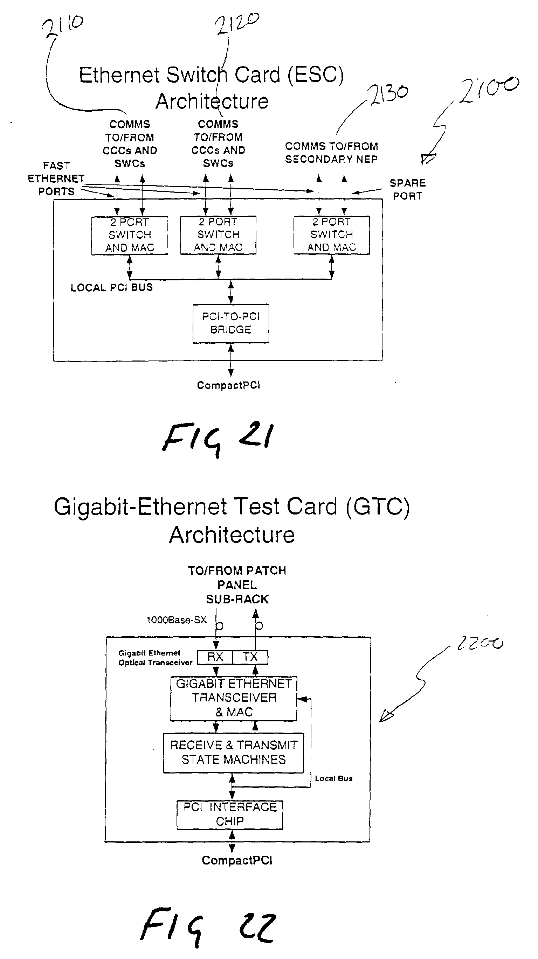

A schematic view of an exemplary communication link test card, being a Gigabit Ethernet Test Card (GTC) 2200 is shown in Fig. 22.

The purpose of the communications link test cards is to provide a simple, low cost, integrated network channel testing facility with the node, without requiring the user to provide expensive general-purpose test and measurement equipment such as bit-error-rate test equipment.

The GTC 2200 card plugs into the backplane in the Management sub-rack, and communicates directly with the SBC. This card provides an end-to-end or loop-back optical link Bit Error Rate Test (BERT) capability, which tests and verifies the operation of communication links within the network.

The GTC 2200 provides an 8B/10B transparent transmission test, Gigabit-Ethernet traffic generator and Gigabit-Ethernet link status monitoring function.

It will be appreciated that the GTC is only one example of a communication link test card which could be provided. Alternative test cards, such as SONET/SDH OC48 test cards could be provided without departing from the scope of the present invention.

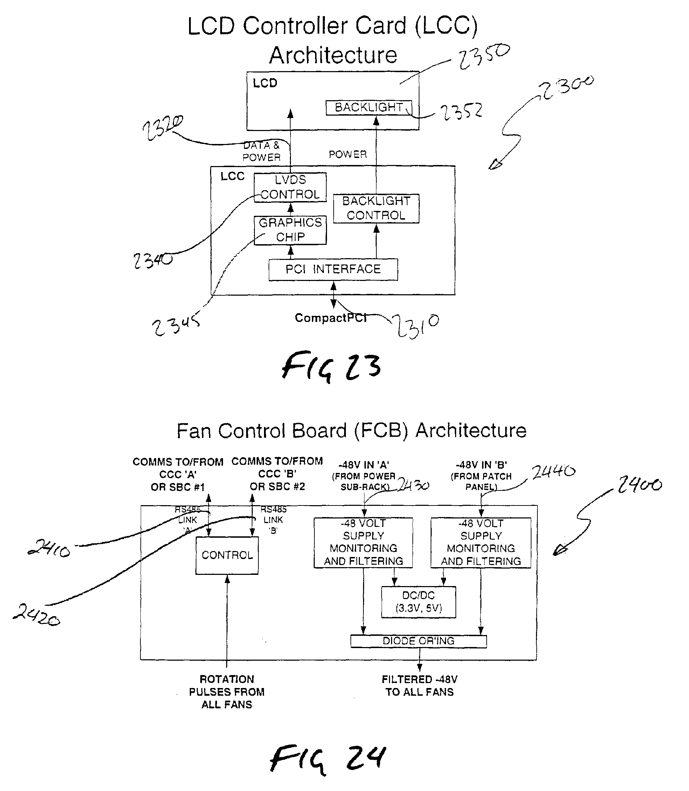

A generic architecture for an LCD controller card (LCC) 2300 is shown in Fig. 23.

The LCC 2300 plugs into the backplane in the Management sub-rack via connection 2310, and communicates directly with the SBC. This card serves to control the operation of the (optional) LCD 2350 on the front of the Management sub-rack.

The LCC is required to send data and power to the LCD via link 2320, and also to control the backlight 2352 for the LCD.

The LCC 2300 has a graphics controller 2345 for controlling the image displayed on the LCD.

Fig 24 shows the architecture of a generic Fan Controller Board (FCB).

An FCB 2400 of this type will be located in each of the fans and air-intake sections of the Management sub-rack, the optical network Interface sub-rack, and the Interface sub-rack.

The board serves to power the fans that cool the interface cards and CCCs, in the Optical Network Interface sub-rack and Interface sub-rack, and cool the PSCs and NEP cards in the Management sub-rack. The FCB 2400 is controlled and monitored via two communication channels 2410, 2420, which connect to either the SBCs (for the Management sub-rack FCB) or the CCCs (for the Ring Interface sub-rack and Interface sub-rack).

Note that in order to prevent a single point of failure, the fans operate off two separate - rail voltages power supply rails 2430, 2440.

It will be appreciated by a person skilled in the art that numerous variations and/or modifications may be made to the present invention as shown in the exemplary embodiments without departing from the spirit or scope of the invention as broadly described. The present embodiments are, therefore, to be considered in all respects to be illustrative and not restrictive.

A modular rack structure for a network node system, the rack structure comprising a plurality of sub-racks, wherein each sub-rack is configured, in use, to carry and interconnect circuit cards which enable the sub-rack to perform a specific functionality within the node system.

## Claims

1. A modular rack structure for a network node system, the rack structure comprising a plurality of sub-racks, wherein each sub-rack is configured, in use, to carry and interconnect circuit cards which enable the sub-rack to perform a specific functionality within the node system.

2. A rack structure as claimed in claim 1, wherein the specific functionality of individual sub-rack comprise as a management sub-rack, or an interface sub-rack, or a switch sub-rack, or a patch panel sub-rack, or a an optical network interface sub-rack, or an optical amplifier sub-rack, or a power distribution sub-rack.

3. A rack structure as claimed in claims 1 or 2, wherein the modular rack structure comprises a distributed power supply structure, whereby, in use, a main rail voltage is being provided by the power distribution sub-rack and wherein specific supply voltages required in individual sub-racks are being derived from the main rail voltage.

4. A rack structure as claimed in claim 3, wherein the individual sub-racks are arranged, in use, to carry a power distribution card and to interconnect the power distribution card to the main rail voltage, wherein the power distribution card is arranged in a manner such that, in use, it filters the main rail voltage for provision of the specific supply voltages required.

5. A rack structure as claimed in claim 3, wherein the power distribution card is further arranged in a manner such that, in use, it isolates the main rail voltage from the specific supply voltages.

6. A rack structure as claimed in any one of claims 3 to 5, wherein the modular rack structure is further arranged in a manner such that two equal main rail voltages are being provided to the individual sub-racks, whereby a 1+1 fault tolerant distribution of the main rail voltage is enabled.

7. A rack structure as claimed in any one of the preceding claims, wherein each sub rack comprises a plurality of first location identification means arranged, in use, to enable a card being connected into the sub-rack to identify its geographic location within the sub-rack.

8. A rack structure as claimed in claim 7, wherein the first identification means are disposed along the backplane of each sub-rack.

9. A rack structure as claimed in claim 8, wherein the identification means comprises connector pins arranged, in use, to be received in a corresponding connector of the card.

10. A rack structure as claimed in any one of the preceding claims, wherein each sub-rack further comprises a second location identification means arranged, in use, to enable each card being connected into the sub-rack to identify sub-rack data.

11. A rack structure as claimed in claim 10, wherein the sub-rack data comprises data which enables each card being inserted into the sub-rack to identify the functionality of the sub-rack.

12. A rack structure as claimed in claims 10 or 11, wherein the sub-rack data comprises data which enables each card being inserted into the sub-rack to identify the type of backplane of the sub-rack.

13. A rack structure as claimed in any one of claims 10 to 12, wherein the first identification means is arranged, in use, to also perform the functionality of the second location identification means.

14. A rack structure as claimed in any one of the preceding claims, wherein at least some of the sub-racks are arranged, in use, to carry and interconnect two sets of circuit cards, wherein each set can enable the sub-rack to perform its specific functionality.

15. A rack structure as claimed in claim 14, wherein the sub-racks arranged, in use, to carry and interconnect two sets of circuit cards comprise switching means for, in use, switching between the sets.

16. A rack structure as claimed in claim 15, wherein the switching means comprises a switch circuit card.
